# EUROPÄISCHE PATENTSCHRIFT

(11) **EP 3 069 596 B1**
(45) Veröffentlichungstag und Bekanntmachung des Hinweises auf die Patenterteilung: **20.12.2017**
(21) Anmeldenummer: 16150372.7
(22) Anmeldetag: 07.01.2016
(51) Int. Cl.: A01D 43/08, A01D 43/073

(54) **FELDHÄCKSLER**
FORAGE HARVESTER
ENSILEUSE

(30) Priorität: 17.03.2015 DE 102015103923
(43) Veröffentlichungstag der Anmeldung: 21.09.2016
(73) Patentinhaber: CLAAS Saulgau GmbH, 88348 Bad Saulgau (DE)
(72) Erfinder: Röttger, Peter, 48361 Beelen (DE); Hohenkirch, Thomas, 33428 Harsewinkel (DE); Weinrich, Ingo, 48147 Münster (DE)

(56) Entgegenhaltungen:
- EP-A1- 0 492 195
- EP-A1- 1 151 652
- EP-A2- 1 393 613
- US-A- 3 451 725
- US-A- 3 516 713

## Beschreibung

Die Erfindung betrifft einen Feldhäcksler mit einem drehfest angeordneten Förderschacht, der einem Auswurfgebläse nachgeordnet ist, und einem drehbar an einem Ende des Förderschachts geführten Auswurfkrümmer, wobei zur Verdrehung des Auswurfkrümmers eine an diesem angreifende, linear wirkende Verstellvorrichtung vorgesehen ist, die einerseits ortsfest angeordnet ist und andererseits an zumindest einem sich radial von einem Außenmantel des Auswurfkrümmers ersteckenden Hebel angreift.

Von einem Feldhäcksler wird über einen Erntevorsatz ein Halmgut oder Mais aufgenommen und über Einzugswalzen eingezogen. Dieses wird dann einer aus Vorpresswalzen, einem Häckselaggregat und Nachzerkleinerungseinrichtungen bestehenden Aufbereitungseinrichtung zugeführt und gelangt in ein Auswurfgebläse, welches in einen Auswurfkanal mündet. Dieser Auswurfkanal ist mit einem als Überladeeinrichtung dienenden Auswurfkrümmer verbunden, über den das Erntegut einem parallel zum Feldhäcksler fahrenden Sammelbehälter zugeführt wird. Der fahrbare Sammelbehälter, der auch als Überladefahrzeuge bezeichnet wird, besteht aus einem zumeist auf einer Doppelachse angeordneten Fahrwerkrahmen, auf dem ein als kippbarer Ladecontainer ausgebildeter Behälter vorgesehen ist.

Zur Steuerung des Überladevorganges in der Weise, dass der Erntegutstrahl stets vollständig in das Innere des Sammelbehälters gerichtet ist, damit Erntegutverluste vermieden werden, und dass das Erntegut gleichmäßig im Sammelbehälter verteilt wird, muss fortlaufend die Stellung des Auswurfkrümmers geändert werden. Zu diesem Zweck ist der Auswurfkrümmer verschwenkbar an dem feststehenden Auswurfkanal angeordnet und an seinem dem Sammelbehälter zugewandten Ende mit einer verstellbaren Leitklappe versehen. Die entsprechende Verschwenkung des Auswurfkrümmers sowie die Ausrichtung von dessen Ende erfolgt dabei mittels einer Verstellvorrichtung.

Außerdem kann dabei der Auswurfkrümmer zweiteilig ausgebildet sein, wobei ein erster Abschnitt drehbar an das Ende des Auswurfkanals gekuppelt ist, während das mit der Leitklappe versehene Ende des zweiten Abschnitts heb- und senkbar ist. Diese Verstellung erfolgt mittels eines Hubzylinders und ist vorgesehen, um die Höhenlage des entsprechenden Endes und somit des Austritts des Erntegutstrahls einzustellen.

Ein Feldhäcksler der im Oberbegriff des Patentanspruchs 1 angegebenen Gattung ist aus der US 3,516,713 A bekannt. Der Auswurfkrümmer dieses Feldhäckslers ist drehbar am Ende des Auswurfkanals geführt, so dass sich dessen Ende verschwenken lässt. Dabei weist die Verstellvorrichtung einen doppeltwirkenden Hydraulikzylinder auf, dessen Zylinder über eine Halterung mit dem feststehenden Auswurfkanal verbunden ist, während das Ende einer Kolbenstange mit einem radial vom Auswurfkrümmer abstehenden Hebel verbunden ist. Daher führt eine Längsbewegung der Kolbenstange zu einer Verdrehung des Auswurfkrümmers und somit zum Verschwenken von dessen Austrittsbereich.

Es ist Aufgabe der vorliegenden Erfindung, eine Verstellvorrichtung zu schaffen, mittels welcher der Auswurfkrümmer unter Verwendung baulich einfacher Mittel mit hoher Schwenkgeschwindigkeit über einen möglichst großen Schwenkwinkel verschwenkbar ist.

Diese Aufgabe wird, ausgehend vom jeweiligen Oberbegriff des Patentanspruchs 1 in Verbindung mit dessen kennzeichnenden Merkmalen gelöst. Die vom Patentanspruch 1 abhängigen Patentansprüche beinhalten erfindungsgemäße Weiterbildungen dieser Lösung.

Danach soll die Verstelleinrichtung aus zwei linear wirkenden Stellelementen bestehen, über die der Auswurfkrümmer, ausgehend von seiner Nullstellung, jeweils gegenläufig verstellbar ist, und dass die Stellelemente zumindest in der Nullstellung im Wesentlichen V-förmig zueinander verlaufen. Mit der Nullstellung des Auswurfkrümmers ist dessen Mittelstellung gemeint, in der ein unter einem Winkel zum vertikalen Abschnitt verlaufender nach außen ragender Abschnitt im Wesentlichen in Fahrtrichtung des Feldhäckslers verläuft. Wird nun eines der Stellelemente aktiviert, so führt das zum Verschwenken des Auswurfkrümmers aus der Nullstellung heraus in die eine Schwenkrichtung, innerhalb welcher die Lage des austrittsseitigen Endes des Auswurfkrümmers ebenfalls über dieses erste Stellelement einjustiert wird.

Dieser durch das erste Stellelement abgedeckte Schwenkbereich endet in der Nullstellung des Auswurfkrümmers, wobei von dieser ein weiterer Schwenkbereich ausgeht, der durch das zweite Stellelement abgedeckt wird. Mittels der beiden im Wesentlichen V-förmig zueinander verlaufenden Stellelemente kann ein relativ großer Schwenkwinkel erzielt werden. Dabei können die Schwenkvorgänge mit hohen Schwenkgeschwindigkeiten sowie mit einer großen Anfahrbeschleunigung ausgeführt werden. Aufgrund der Schwenkkinematik wird in den Lagen des Auswurfkrümmers, die dieser beim Überladen in den vorderen und hinteren Bereich des Sammelbehälters einnimmt, eine vorteilhafte Möglichkeit einer Feinjustierung geschaffen. Diese resultiert daraus, dass sich über den gesamten Stellweg jedes der beiden Stellelemente, bezogen auf die erzielte Verschwenkung, unterschiedliche Übersetzungsverhältnisse ergeben.

Demgegenüber soll nach der Druckschrift US 3,516,713 A zum Verschwenken des Auswurfkrümmers nur ein als Stellelement dienender Hydraulikzylinder vorgesehen sein, welcher den gesamten, vergleichsweise kleinen Schwenkwinkel abdeckt. Um diesen Schwenkbereich zu verändern, sind am Außenmantel des Auswurfkrümmers weitere, umfangsversetzt zu dem die Kolbenstange aufnehmenden Hebel angeordnete Hebel vorgesehen. Daher muss die Verbindung der Kolbenstange mit dem jeweiligen Hebel gelöst und dieser an einem der anderen Hebel fixiert werden, was sehr aufwändig und für einen ununterbrochenen Erntebetrieb völlig ungeeignet ist.

Der Feldhäcksler kann als selbstfahrende Erntemaschine ausgebildet sein, welche einen Gutstrom des Erntegutes über den als Überladeeinrichtung dienenden Auswurfkrümmer auf den fahrbaren Sammelbehälter fördert. Der Feldhäcksler weist einen Erntevorsatz auf, der das Halmgut aufnimmt und Einzugswalzen zuleitet. Diesen sind Vorpresswalzen nachgeschaltet, die für eine weitere Verdichtung des Erntegutstromes sorgen. In Förderrichtung des Erntegutes befindet sich hinter den Vorpresswalzen eine mit Häckselmessern versehene Häckseltrommel, die mit feststehenden Gegenschneiden zusammenwirkt. Das gehäckselte Erntegut wird anschließend über Gutbleche und einen Häckselboden einer Nachzerkleinerungseinrichtung zuführt, die dazu dient, bei der Ernte von Silomais oder Mais für eine Biogasanlage die Maiskörner derart zu beschädigen, dass diese mit in den anschließenden Gärungsprozess einbezogen werden. In diesem Zustand gelangt das Erntegut in den Bereich des Auswurfgebläses, über welches es in den Auswurfkanal und anschließend in den verstellbaren Auswurfkrümmer gelangt.

Selbstfahrende Feldhäcksler werden durch entsprechende Dimensionierung der Aufbereitungsvorrichtung und durch eine größere Arbeitsbreite aufweisende Vorsatzgeräte für größere Flächenleistungen ausgelegt. Diese Verbreiterung der Vorsatzgeräte führt dazu, dass der entsprechende von einem Traktor gezogene Sammelbehälter mit einem größeren seitlichen Abstand zum Feldhäcksler verfahren werden muss. Daraus und aus hohen Sammelbehältern mit einem großen Fassungsvermögen resultiert, dass sehr lange Auswurfkrümmer erforderlich werden, so dass sich die von der Verstellvorrichtung bewegten Massen vergrößern.

Die aus zwei im Wesentlichen V-förmig zueinander verlaufenden Stellelementen bestehende Verstellvorrichtung ist in besonderer Weise geeignet, diese großen Massen zu bewegen, wobei sich die geforderten hohen Schwenkgeschwindigkeiten des austrittsseitigen Abschnitts des Auswurfkrümmers erzielen lassen. Dabei können Verschleiß- und Festigkeitsprobleme des Systems vermieden werden.

In Weiterbildung der Erfindung sollen die Stellelemente als Hydraulikzylinder ausgebildet sind, die über zumindest ein Wegeventil steuerbar sind. Dabei handelt es sich vorzugsweise um doppeltwirkende Hydraulikzylinder, die über das zumindest eine Wegeventil derart gesteuert werden, dass während einer Verstellung des Auswurfkrümmers der eine Hydraulikzylinder mit Druck beaufschlagt und der andere Hydraulikzylinder in einer Schwimmstellung betrieben wird.

Dabei kann jedem der Hydraulikzylinder ein elektromagnetisch betätigtes 4/4-Wegeventil zugeordnet ist, wobei die 4/4-Wegeventile mit einer Steuereinrichtung verbunden sind. Das 4/4-Wegeventil weist zwei Arbeitsstellungen, eine Schwimmstellung und eine Sperrstellung, auf und wird über eine in der Kabine des selbstfahrenden Feldhäckslers vorgesehene Steuereinrichtung elektromagnetisch betätigt. Es besteht aber auch die Möglichkeit, dass von dem zumindest einen Wegeventil beide Hydraulikzylinder gleichzeitig über jeweils einen ihrer Druckräume mit Druckmittel beaufschlagt werden.

Außerdem bestehen gegenüber bisher bekannten Verstelleinrichtungen erhebliche Vorteile hinsichtlich der Wartungsfreundlichkeit und des Wartungsaufwands dieser erfindungsgemäßen Verstelleinrichtung. Das Verstellsystem zeichnet sich außerdem durch geringe Verstellgeräusche aus, was zu einer höheren Laufruhe beiträgt. Eine Überlastsicherung, mittels der Schäden verhindert werden sollen, wenn der Auswurfkrümmer gegen einen Widerstand bewegt wird, kann mittels vorzugsweise zweier Druckbegrenzungsventile geschaffen werden, die jeweils den Hydraulikzylindern zugeordnet sind.

Wie bereits dargelegt, sollen die beiden Stellelemente im Wesentlichen V-förmig zueinander verlaufen und an einem sich radial vom Außenmantel des Auswurfkrümmers ersteckenden Hebel angreifen. Dabei ist vorgesehen, dass die Stellelemente an ihrem einen Ende schwenkbar an einem Gestell des Feldhäckslers geführt sind und mit ihren anderen Enden in unterschiedlichen Ebenen an einem dem Hebel zugeordneten gemeinsamen Schwenklager angreifen. Das gemeinsame Schwenklager kann am oder im Hebel angeordnet sein.

Mit der erfindungsgemäßen Kinematik der Verstellvorrichtung lassen sich mit jedem der Stellelemente aus der Nullstellung ein maximaler Schwenkwinkel α ≥ °90 bzw. β ≥ 90° bewirken. Schließlich kann mit der Kinematik der Verstellvorrichtung ein maximaler Gesamtschwenkwinkel des Auswurfkrümmers von γ = 225°erzielt werden, wobei der Auswurfkrümmer über jedes der Stellelemente um einen maximalen Schwenkwinkel α = 112,5°sowie β = 112,5°verschwenkbar ist.

Die Erfindung ist nicht auf die angegebene Kombination der Merkmale des Patentanspruchs 1 und der abhängigen Patentansprüche beschränkt. Es ergeben sich darüber hinaus Möglichkeiten, einzelne Merkmale, auch soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine Seitenansicht einer als selbstfahrender Feldhäcksler ausgebildeten Erntemaschine ohne Erntevorsatz,
- Figur 2: eine schematische Darstellung eines selbstfahrenden Feldhäckslers mit einem Teilschnitt im Bereich eines Erntevorsatzes sowie einer Einrichtung zur Aufbereitung des Erntegutes und
- Figur 3: den selbstfahrenden Feldhäcksler während eines Erntevorganges, bei dem das Erntegut mittels einer als Auswurfkrümmer ausgebildeten Überladeeinrichtung auf einen parallel zum Feldhäcksler fahrenden Sammelbehälter gefördert wird,
- Figur 4: eine erfindungsgemäße Verstelleinrichtung zum Verschwenken des Auswurfkrümmers, die zwei als Hydraulikzylinder ausgebildete Stellelemente aufweist, in ihrer Nullstellung,
- Figur 5: die Verstelleinrichtung in einer ersten maximalen Stellung und
- Figur 6: die Verstelleinrichtung in einer zweiten maximalen Stellung.

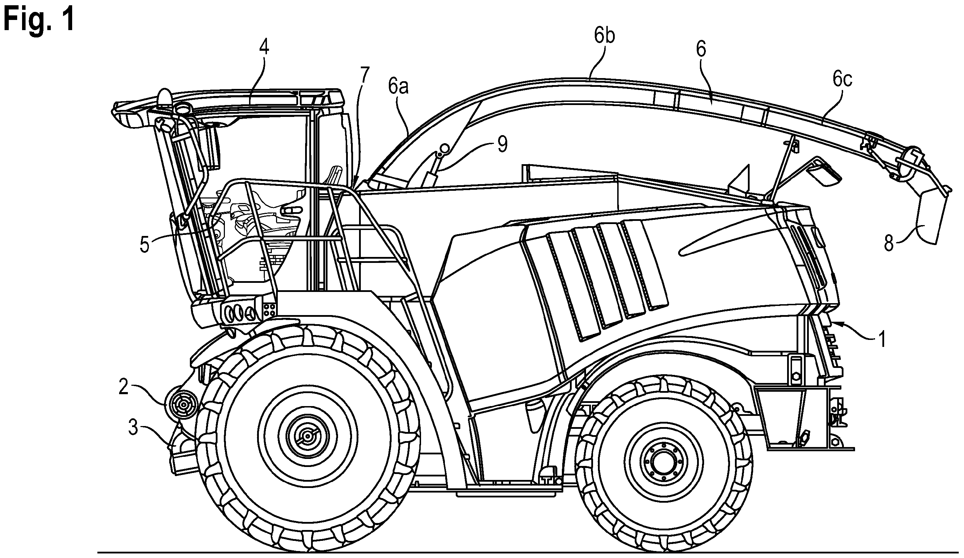

In der Figur 1 ist mit 1 ein selbstfahrender Feldhäcksler bezeichnet, der in seinem frontseitigen Bereich derart gestaltet ist, dass er einen in dieser Figur 1 nicht dargestellten Erntevorsatz aufnehmen kann. Da dieser Erntevorsatz entfernt ist, sind Einzugswalzen 2 und 3 sichtbar, über die das vom Erntevorsatz aufgenommene Erntegut verdichtet und in das Innere des Feldhäckslers 1 gefördert wird. Weiterhin weist der selbstfahrende Feldhäcksler 1 eine Fahrerkabine 4 auf, in der sich eine vom Fahrer bedienbare Steuereinrichtung 5 befindet, wobei mittels der Steuereinrichtung 5 unter anderem auch die Stellung eines als Überladeeinrichtung dienenden verschwenkbaren Auswurfkrümmers 6 veränderbar ist. Dieser Auswurfkrümmer 6 weist einen im Wesentlichen vertikal verlaufenen ersten Endabschnitt 6a, einen sich daran anschließen mit einem Radius gekrümmten Abschnitt 6b sowie einen zweiten Endabschnitt 6c auf, der im Wesentlichen horizontal verlaufen kann. Der Auswurfkrümmer 6 befindet sich in der Figur 1 in einer abgesenkten Ruheposition, und die Abschnitte 6a bis 6c nehmen den beschriebenen Verlauf ein, wenn der Auswurfkrümmer 6 durch einen nachfolgend aufgeführten Hubzylinder 9 in seine Arbeitsposition angehoben wird.

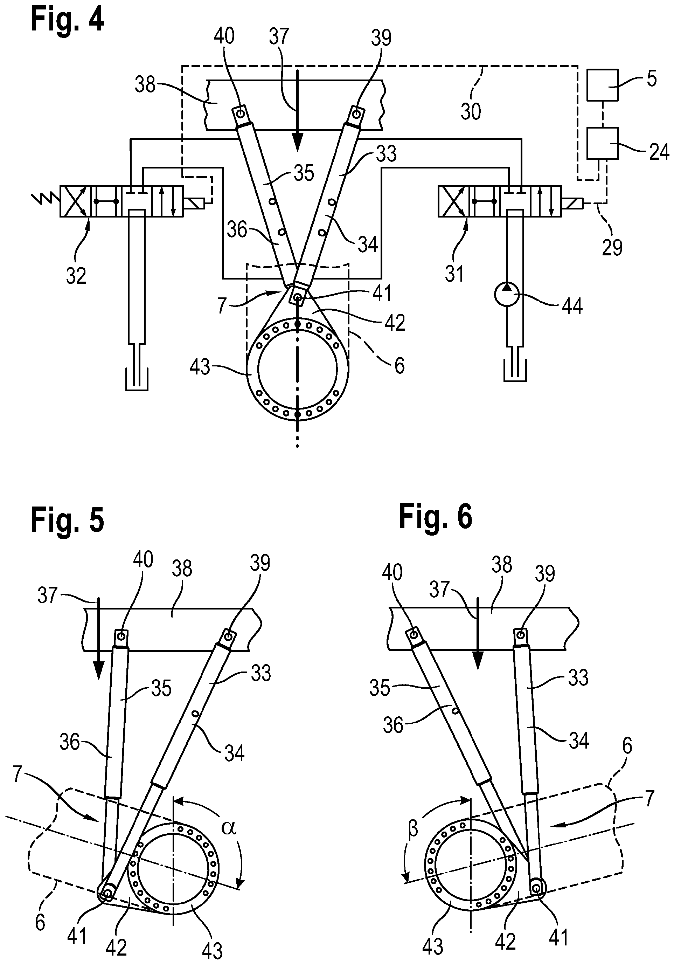

Die Verschwenkung des Auswurfkrümmers 6 erfolgt mittels einer Verstelleinrichtung 7, um das Erntegut gezielt einem in der Figur 1 nicht näher dargestellten Sammelfahrzeug, das parallel, aber versetzt zum Feldhäcksler 1 fährt, zuzuführen. Diese Verstelleinrichtung 7, die Gegenstand der vorliegenden Erfindung ist, wird weiter unten anhand der Figuren 4 bis 6 näher beschrieben. Am Ende des Auswurfkrümmers 6 befindet sich eine Auswurfklappe 8, die um eine horizontale Achse verschwenkbar ist. Die Auswurfklappe 8 ist verstellbar ausgeführt. Außerdem ist das mit der Auswurfklappe 8 versehene Ende des Auswurfkrümmers 6 mittels eines Hubzylinders 9 heb- und senkbar. In der Figur 1 befindet sich der Auswurfkrümmer 6 in einer Stellung, die er außerhalb eines Erntevorgangs während einer Fahrt des selbstfahrenden Feldhäckslers 1 auf einer Straße oder einem Feldweg einnimmt.

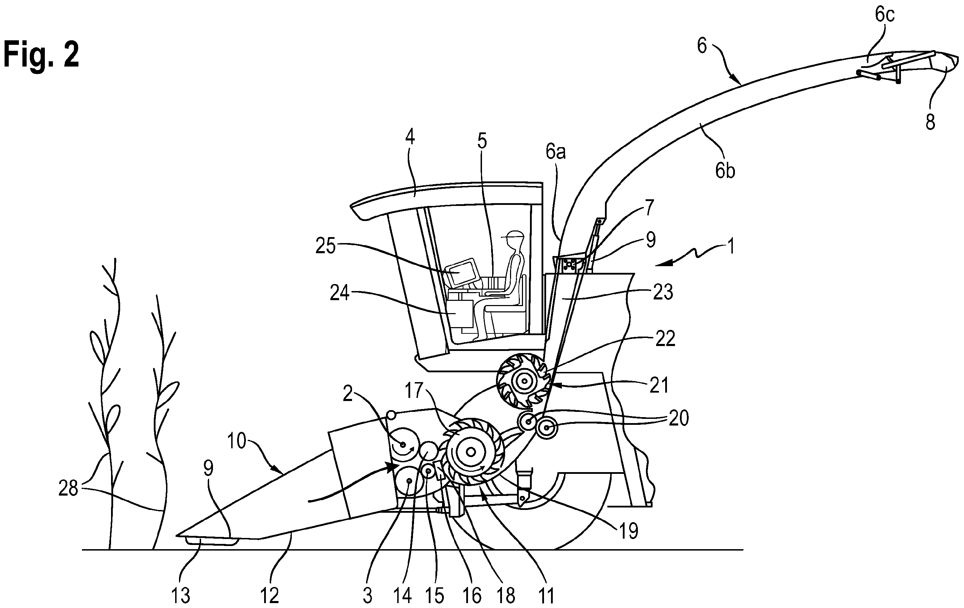

Zur weiteren Erläuterung der Ausbildung des in Figur 1 dargestellten selbstfahrenden Feldhäckslers 1 wird auf die Figur 2 verwiesen, in der ein entsprechender Feldhäcksler 1 schematisch und zum Teil im Schnitt dargestellt ist. In diesem Fall ist der Feldhäcksler 1 im Gegensatz zu der Darstellung in Figur 1 mit einem Erntevorsatz 10 verbunden. Weiterhin weist der Feldhäcksler 1 eine Aufbereitungsvorrichtung 11 für das Erntegut sowie den in einer Erntestellung befindlichen Auswurfkrümmer 6 auf. Die Fahrerkabine 4 ist oberhalb des Erntevorsatzes 10 beziehungsweise der Aufbereitungsvorrichtung 11 angeordnet.

Der Erntevorsatz 10 ist mit einem Bodenblech 12 versehen, das den Erntevorsatz 10 in Richtung des überfahrenden Bodens begrenzt und das Erntegut in Richtung der Aufbereitungseinrichtung 11 führt. Außerdem ist der Erntevorsatz 10 mit mehreren Kufen 13 versehen, über die der Erntevorsatz 10 auf dem überfahrenden Boden gleitet. An den Erntevorsatz 10 schließen sich die Einzugswalzen 2 und 3 an, die paarweise angetrieben werden und zwischen denen das Erntegut hindurchgeführt wird. Dabei ziehen die Einzugswalzen 2 und 3 das Erntegut nicht nur in die Erntemaschine 1 ein, sondern sie verdichten den Erntegutstrom auch. Eine weitere Verdichtung des Erntegutstroms erfolgt durch die sich daran anschließenden Vorpresswalzen 14 und 15, die ebenfalls paarweise angetrieben werden. Dabei ist die untere Vorpresswalze 15 mit einer glatten Oberfläche versehen und wirkt mit einem Abstreifer 16 zusammen, der das an der glatten Oberfläche anhaftende Erntegut von dieser löst.

Der verdichtete Erntegutstrom gelangt sodann in eine mit Messern versehende Häckseltrommel 17, die mit feststehenden Gegenschneiden 18 zusammenwirkt. Das gehäckselte Erntegut wird anschließend über nicht näher dargestellte seitliche Gutleitbleche und über einen Häckselboden 19 einer Nachbehandlungseinrichtung 20 zugeführt. Diese Nachbehandlungseinrichtung 20, die auch als Konditioniereinrichtung oder als Corn-Cracker bezeichnet wird, dient dazu, bei der Ernte von Silomais oder Mais für eine Biogasanlage die Maiskörner derart zu beschädigen, dass diese mit in den anschließenden Gärungsprozess einbezogen werden können.

Unmittelbar hinter der Nachbehandlungseinrichtung 20 befindet sich als Teil einer Fördereinrichtung 21 ein Auswurfgebläse 22, das das zerkleinerte Erntegut in einen Förderschacht 23 transportiert, wobei sich an diesen Förderschacht 23 der verstellbare Auswurfkrümmer 6 anschließt. Der Auswurfkrümmer 6 ist dabei mit seinem einem Ende des Förderschachts 23 zugewandten Endabschnitt 6a drehbar an diesem geführt und nimmt, wie bereits im Zusammenhang mit der Figur 1 beschrieben, an seinem Ende 6c die ebenfalls verstellbare Auswurfklappe 8 auf.

Weiterhin weist der selbstfahrende Feldhäcksler eine CPU 24 auf, an die unter anderem ein Display 25 und die vom Fahrer bedienbare Steuereinrichtung 5 angeschlossen sind. Weiterhin kann die CPU 24 mit Einrichtungen kommunizieren, die die aktuelle Stellung des Auswurfkrümmers 6, die Position des jeweiligen Sammelfahrzeugs und die Erntegutverteilung auf dem Sammelfahrzeug erfassen. Die CPU 24 kann selbsttätig Verstellvorgänge vornehmen oder alternativ dazu über das Display 25 Empfehlungen geben, die manuell mit der Steuereinrichtung 5 ausgeführt werden.

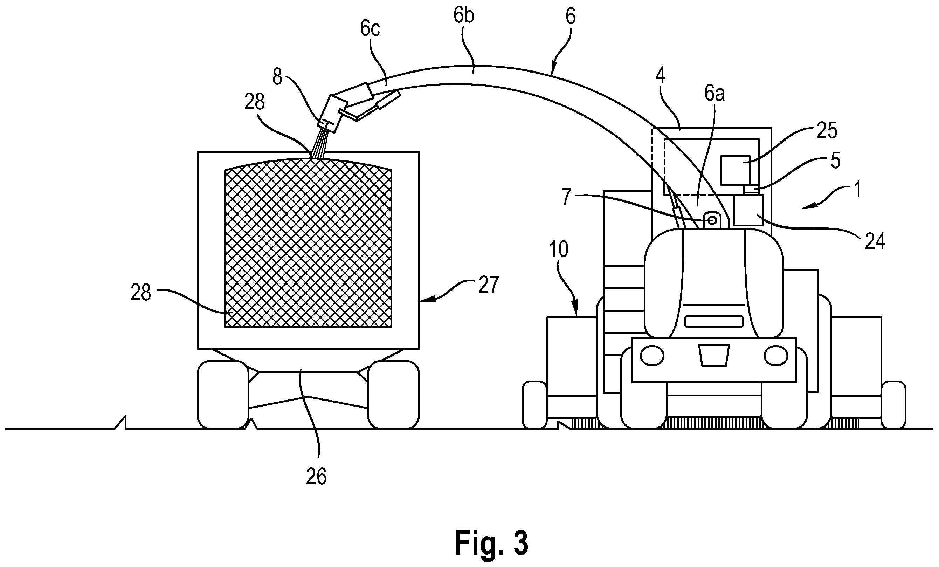

In der Figur 3 ist der selbstfahrende Feldhäcksler 1 während eines Erntevorganges dargestellt. Neben dem Feldhäcksler 1 fährt mit im Wesentlichen gleicher Geschwindigkeit ein auf einem Fahrgestell 26 angeordneter Sammelbehälter 27, der von einem nicht näher dargestellten Traktor gezogen wird. In dem Sammelbehälter 27 hat sich eine Menge des Erntegutes 28 angesammelt und es ist darauf zu achten, dass dieses Erntegut 28, das fortlaufend über den Auswurfkrümmer 6 gefördert wird, das Innere des Sammelbehälters 27 gleichmäßig ausfüllt.

Außerdem können sich die Positionen des Feldhäckslers 1 und des Sammelbehälters 27, die diese zueinander einnehmen, laufend ändern, so dass die Gefahr besteht, dass das zu überladende Erntegut nicht in den Sammelbehälter 27 sondern auf das Feld gelangt und somit Ernteverluste auftreten. Daher wird zum einen der Auswurfkrümmer 6 durch die Verstelleinrichtung 7 gegenüber dem Förderschacht 23 (vergleiche Figur 2) in unterschiedliche Stellungen verschwenkt, und zum anderen wird die Auswurfklappe 8 verstellt.

In den Figuren 4 bis 6 ist die erfindungsgemäße Verstelleinrichtung 7 dargestellt. Dabei zeigt die Figur 5 auch die Steuereinrichtung 5, die mit der CPU 24 zusammenwirkt. Von der CPU 24 gehen Signalleitungen 29 und 30 aus, die an zwei elektromagnetisch betätigte 4/4-Wegeventile 31 und 32 angeschlossen sind. Über das Wegeventil 31 wird ein erster doppeltwirkender Hydraulikzylinder 33, welcher ein Stellelement 34 bildet, betätigt, während mittels des Wegeventils 32 ein zweites, ebenfalls als doppeltwirkender Hydraulikzylinder 35 ausgebildetes Stellelement 36 verstellbar ist. Die Fahrtrichtung des selbstfahrenden Feldhäckslers 1 während eines Erntevorganges ist in den Figuren 4 bis 6 durch einen Pfeil 37 dargestellt.

Weiterhin ist in den Figuren 4 bis 6 mit 38 ein Gestell- oder Rahmenteil des selbstfahrenden Feldhäckslers 1 bezeichnet, an dem durch ein erstes und ein zweites Schwenklager 39 und 40 jeweils der erste Hydraulikzylinder 33 und der zweite Hydraulikzylinder 35 mit ihrem einen Ende angreifen. Die anderen Enden dieser beiden Hydraulikzylinder 33 und 35 sind durch ein gemeinsames drittes Schwenklager 41 mit einem Hebel 42 verbunden. Die Enden der beiden Hydraulikzylinder 33 und 35 verlaufen zueinander im Wesentlichen V-förmig und in unterschiedlichen vertikalen Ebenen. Dabei ist der Hebel 42 drehfest mit einem den Auswurfkrümmer 6 umschließenden Flansch 43 ausgebildet. Zur Druckmittelversorgung der beiden 4/4-Wegeventile 31 und 32 ist eine Hydraulikpumpe 44 vorgesehen.

In der Figur 4 befindet sich die Verstelleinrichtung 7 in ihrer Nullstellung, so dass der Auswurfkrümmer 6 in eine Position verschwenkt ist, dass dessen mit einem Radius gekrümmter Abschnitt 6b sowie dessen zweiter Endabschnitt 6c, wie durch gestrichelte Linien gekennzeichnet, in Längsrichtung des selbstfahrenden Feldhäckslers verlaufen. Diese Position entspricht der, die in der Figur 1 dargestellt ist und in der die hydraulische Verstelleinrichtung 7 durch eine Sperrstellung beider 4/4-Wegeventile 31 und 32 verriegelt ist, wird von dem Auswurfkrümmer 6 eingenommen, wenn sich der Feldhäcksler 1 vor oder nach einem Ernteeinsatz auf öffentlichen Straßen oder Feldwegen befindet.

Werden nun gemäß Figur 5 das erste 4/4-Wegeventil 31 in seine Arbeitsstellung und das zweite 4/4-Wegeventil 32 in seine Schwimmstellung verstellt, wird der Auswurfkrümmer 6, wie durch die gestrichelten Linien angedeutet, aus der Nullstellung entgegen dem Uhrzeigersinn verschwenkt, indem der erste Hydraulikzylinder 33 einseitig druckbeaufschlagt wird. In der Schwimmstellung des 4/4-Wegeventils 32 sind beide Druckräume des zweiten Hydraulikzylinders 35 miteinander verbunden. Die Verstellung kann, wie in der Figur 5 dargestellt, um einen maximalen Schwenkwinkel a=112,5° geschehen. Der Sammelbehälter 27 muss in diesem Fall auf der, in Fahrtrichtung gesehen, rechten Seite des Feldhäckslers 1 fahren. Natürlich kann der Auswurfkrümmer 6 über die beiden 4/4-Wegeventile in jede zwischen der Nullstellung und dem maximalen Schwenkwinkel α liegende Position verstellt werden.

Soll im Gegensatz dazu in einer anderen Richtung am Bestand geerntet werden, so dass sich der fahrbare Sammelbehälter 27 auf der, in Fahrtrichtung gesehen, linken Seite befindet, wird der Auswurfkrümmer 6, wie in der Figur 6 durch die gestrichelten Linien angedeutet, im Uhrzeigersinn aus der Nullstellung verschwenkt, indem der zweite Hydraulikzylinder 35 druckbeaufschlagt wird. Auch in dieser Richtung kann eine Verschwenkung um einen maximalen Schwenkwinkel β=112,5°erfolgen. Dabei werden vorzugsweise das zweite 4/4-Wegeventil 32 in seine Arbeitsstellung und das erste 4/4-Wegeventil 31 in seine Schwimmstellung verstellt. Insgesamt wird somit ein maximaler Schwenkwinkel γ = 225°erreicht.

Die durch die beiden Hydraulikzylinder 33 und 35 und den Hebel 42 gebildete Verstellvorrichtung 7 ist in besonderer Weise geeignet, diese großen Massen des Auswurfkrümmers 6 zu bewegen, wobei sich die geforderten hohen Schwenkgeschwindigkeiten des austrittsseitigen Abschnitts 6c des Auswurfkrümmers 6 erzielen lassen. Dabei können Verschleiß- und Festigkeitsprobleme des Systems vermieden werden. Durch die Verwendung zweier Hydraulikzylinder 33 und 35 zum Verschwenken des Auswurfkrümmers 6 können neben dem großen erzielbaren Schwenkwinkel γ auch eine hohe Anfahrbeschleunigung sowie hohe Schwenkgeschwindigkeiten erzielt werden.

Bedingt durch die besondere Anlenkung der beiden Hydraulikzylinder 33 und 35 an dem im Hebel 42 vorgesehenen gemeinsamen dritten Schwenklager 41 und deren im Wesentlichen V-förmigen Verlauf zueinander ergeben sich in vorteilhafter Weise, ausgehend von einer Nullstellung der Verstellvorrichtung 7, in der sich der Auswurfkrümmer 6 vorzugsweise in Längsrichtung des Feldhäckslers 1 befindet, hohe Anfahrbeschleunigungen. Da es sich um ein hydraulisches Stellsystem handelt, also auf ein Zahnradgetriebe oder einen Schneckentrieb verzichtet werden kann, lässt sich dieser Stellantrieb mit geringeren Herstellkosten realisieren und beseitigt bislang vorhandene Verschleißprobleme.

### Bezugszeichenliste

- 1: Erntemaschine
- 2: obere Einzugswalze
- 3: untere Einzugswalze
- 4: Fahrerkabine
- 5: Steuereinrichtung
- 6: Auswurfkrümmer
- 6a: vertikal verlaufender erster Endabschnitt von 6
- 6b: gekrümmter Abschnitt von 6
- 6c: horizontal verlaufender Endabschnitt von 6
- 7: Verstelleinrichtung
- 8: Auswurfklappe
- 9: Hubzylinder
- 10: Erntevorsatz
- 11: Aufbereitungseinrichtung
- 12: Bodenblech von 10
- 13: Kufen von 10
- 14: obere Vorpresswalze
- 15: untere Vorpresswalze
- 16: Abstreifer
- 17: Häckseltrommel
- 18: Gegenschneiden von 15
- 19: Häckselboden
- 20: Nachzerkleinerungseinrichtung
- 21: Fördereinrichtung
- 22: Auswurfgebläse
- 23: Förderschacht
- 24: CPU (central-processing-unit)
- 25: Display
- 26: Fahrgestell
- 27: Sammelbehälter
- 28: Erntegut
- 29: Signalleitung
- 30: Signalleitung
- 31: 4/4-Wegeventil
- 32: 4/4-Wegeventil
- 33: erster Hydraulikzylinder
- 34: Stellelement
- 35: zweiter Hydraulikzylinder
- 36: Stellelement
- 37: Pfeil für Fahrtrichtung von 1
- 38: Gestell- oder Rahmenteil von 1
- 39: erstes Schwenklager
- 40: zweites Schwenklager
- 41: drittes Schwenklager
- 42: Hebel
- 43: Flansch
- 44: Hydraulikpumpe

## Patentansprüche

1. Feldhäcksler (1) mit einem drehfest angeordneten Förderschacht (23), der einem Auswurfgebläse (22) nachgeordnet ist, und einem drehbar an einem Ende des Förderschachts (23) geführten Auswurfkrümmer (6), wobei zur Verdrehung des Auswurfkrümmers (6) eine an diesem angreifende linear wirkende Verstellvorrichtung (7) vorgesehen ist, die einerseits ortsfest angeordnet ist und andererseits an zumindest einem sich radial von einem Außenmantel des Auswurfkrümmers (6) ersteckenden Hebel (42) angreift, **dadurch gekennzeichnet, dass** die Verstelleinrichtung (7) aus zwei linear wirkenden Stellelementen (34 und 36) besteht, über die der Auswurfkrümmer (6), ausgehend von seiner Nullstellung, jeweils gegenläufig verstellbar ist, und dass die Stellelemente (34 und 36) zumindest in einer Nullstellung des Auswurfkrümmers (6) im Wesentlichen V-förmig zueinander verlaufen.

2. Feldhäcksler (1) nach Patentanspruch 1, **dadurch gekennzeichnet, dass** die Stellelemente (34 und 36) als Hydraulikzylinder (33 und 35) ausgebildet sind, die über zumindest ein Wegeventil (31, 32) steuerbar sind.

3. Feldhäcksler (1) nach Patentanspruch 1, **dadurch gekennzeichnet, dass** die Stellelemente (34 und 36) an ihrem einen Ende schwenkbar an einem Gestell (38) des Feldhäckslers (1) geführt sind und mit ihren anderen Enden in unterschiedlichen Ebenen an einem dem Hebel (42) zugeordneten gemeinsamen Schwenklager (41) angreifen.

4. Feldhäcksler (1) nach Patentanspruch 2, **dadurch gekennzeichnet, dass** während einer Verstellung des Auswurfkrümmers (6) über den einen Hydraulikzylinder (33, 35) sich der andere Hydraulikzylinder (33, 35) in einer Schwimmstellung befindet.

5. Feldhäcksler (1) nach Patentanspruch 2, **dadurch gekennzeichnet, dass** jedem der Hydraulikzylinder (33 und 35) ein elektromagnetisch betätigtes 4/4-Wegeventil (31, 32) zugeordnet ist, wobei die 4/4-Wegeventile (31 und 32) mit einer Steuereinrichtung (5) verbunden sind.

6. Feldhäcksler (1) nach Patentanspruch 1, **dadurch gekennzeichnet, dass** jedes der Stellelemente (34 und 36) aus der Nullstellung einen maximalen Schwenkwinkel α ≥ °90 bzw. β ≥ 90°des Auswurfkrümmers (6) bewirkt.

7. Feldhäcksler (1) nach Patentanspruch 6, **dadurch gekennzeichnet, dass** ein maximaler Gesamtschwenkwinkel des Auswurfkrümmers (6) von γ = 225°erzielbar ist, wobei der Auswurfkrümmer (6) über jedes der Stellelemente (34, 36) um einen maximalen Schwenkwinkel α = 112,5°sowie β = 112,5°verschwenkbar ist.

## Claims

1. A forage harvester (1) having a non-rotatably arranged conveyor shaft (23) arranged downstream of a discharge blower (22), and a discharge spout (6) guided rotatably at one end of the conveyor shaft (23), wherein for rotation of the discharge spout (6) there is provided a linearly acting displacement device (7) which engages the discharge spout and which on the one hand is arranged stationarily and which on the other hand engages at least one lever (42) extending radially from an outside casing of the discharge spout (6), **characterised in that** the displacement device (7) comprises two linearly acting displacement elements (34 and 36), by way of which the discharge spout (6) is respectively displaceable in opposite relationship starting from its neutral position, and that the displacement elements (34 and 36) extend substantially in a V-shape relative to each other at least in a neutral position of the discharge spout (6).

2. A forage harvester (1) according to claim 1 **characterised in that** the displacement elements (34 and 36) are in the form of hydraulic cylinders (33 and 35) which are controllable by way of at least one directional control valve (31, 32).

3. A forage harvester (1) according to claim 1 **characterised in that** the displacement elements (34 and 36) are guided at their one end pivotably on a frame structure (38) of the forage harvester (1) and with their other ends engage in different planes a common pivot mounting (41) associated with the lever (42).

4. A forage harvester (1) according to claim 2 **characterised in that** during a displacement of the discharge spout (6) by way of the one hydraulic cylinder (33, 35) the other hydraulic cylinder (33, 35) is in a float position.

5. A forage harvester (1) according to claim 2 **characterised in that** an electromagnetically actuated 4/4-way valve (31, 32) is associated with each of the hydraulic cylinders (33 and 35), wherein the 4/4-way valves (31 and 32) are connected to a control device (5).

6. A forage harvester (1) according to claim 1 **characterised in that** each of the displacement elements (34 and 36) produces from the neutral position a maximum pivotal angle α≥90° and β≥90° of the discharge spout (6).

7. A forage harvester (1) according to claim 6 **characterised in that** a maximum total pivotal angle of the discharge spout (6) of γ =225° can be achieved, wherein the discharge spout (6) is pivotable by way of each of the displacement elements (34, 36) by a maximum pivotal angle α = 112.5° and β = 112.5°.

## Revendications

1. Ensileuse (1) comprenant une colonne d'amenée (23) montée fixe en rotation et disposée à la suite d'une soufflante d'éjection (22) et comprenant une goulotte (6) guidée à rotation à une extrémité de la colonne d'amenée (23), pour la rotation de la goulotte (6) étant prévu un dispositif de réglage à action linéaire (7) qui agit sur celle-ci et qui, d'une part, est monté fixe et, d'autre part, agit sur au moins un levier (42) s'étendant radialement à partir d'une enveloppe extérieure de la goulotte (6), **caractérisée en ce que** l'équipement de réglage (7) est constitué de deux éléments de déplacement à action linéaire (34 et 36) permettant de déplacer à chaque fois la goulotte (6) en sens inverse à partir d'une position neutre, et **en ce que**, au moins dans une position neutre de la goulotte (6), les éléments de déplacement (34 et 36) se rejoignent en formant sensiblement un V.

2. Ensileuse (1) selon la revendication 1, **caractérisée en ce que** les éléments de déplacement (34 et 36) sont conformés en vérins hydrauliques (33 et 35) qui sont chacun commandables par l'intermédiaire d'au moins une valve directionnelle (31, 32).

3. Ensileuse (1) selon la revendication 1, **caractérisée en ce que**, à l'une de leurs extrémités, les éléments de déplacement (34 et 36) sont guidés à pivotement sur un bâti (38) de l'ensileuse (1) et, avec leur autre extrémité, agissent dans divers plans sur un palier pivotant commun (41) associé au levier (42).

4. Ensileuse (1) selon la revendication 2, **caractérisée en ce que**, pendant un déplacement de la goulotte (6) par l'intermédiaire de l'un des vérins hydrauliques (33, 35), l'autre vérin hydraulique (33, 35) se trouve dans une position flottante.

5. Ensileuse (1) selon la revendication 2, **caractérisée en ce qu'**à chacun des vérins hydrauliques (33 et 35) est associée une valve à 4/4 voies à commande électromagnétique (31, 32), les valves à 4/4 voies (31 et 32) étant reliées à un équipement de commande (5).

6. Ensileuse (1) selon la revendication 1, **caractérisée en ce que**, à partir de la position neutre, chacun des éléments de déplacement (34 et 36) fait décrire à la goulotte (6) un angle de pivotement maximal α ≥ 90°, respectivement β ≥ 90°.

7. Ensileuse (1) selon la revendication 6, **caractérisée en ce que** l'angle de pivotement maximal total pouvant être atteint par la goulotte (6) est de γ = 225°, la goulotte (6) pouvant pivoter, à l'aide de chacun des éléments de déplacement (34, 36), d'un angle de pivotement maximal α = 112,5° ainsi que β = 112,5°.
